(19) Europäisches Patentamt
European Patent Office
Office européen des brevets

(11) **EP 4 129 925 A1**

(12) **EUROPEAN PATENT APPLICATION**
published in accordance with Art. 153(4) EPC

(43) Date of publication:
**08.02.2023 Bulletin 2023/06**

(21) Application number: **21778719.1**

(22) Date of filing: **02.04.2021**

(51) International Patent Classification (IPC):
**C01G 53/00** (1968.09)   **H01M 4/505** (2010.01)
**H01M 4/525** (2010.01)

(52) Cooperative Patent Classification (CPC):
**C01G 53/00; H01M 4/505; H01M 4/525;**
Y02E 60/10

(86) International application number:
**PCT/JP2021/014290**

(87) International publication number:
**WO 2021/201270 (07.10.2021 Gazette 2021/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.04.2020 JP 2020067427**

(71) Applicant: **Tanaka Chemical Corporation
Fukui-shi, Fukui 910-3131 (JP)**

(72) Inventors:
• **KATAGIRI Kazuki
Fukui-shi, Fukui 910-3131 (JP)**
• **IIDA Yasutaka
Fukui-shi, Fukui 910-3131 (JP)**
• **TAKASHIMA Masahiro
Fukui-shi, Fukui 910-3131 (JP)**

(74) Representative: **Weickmann, Hans
Weickmann & Weickmann
Patent- und Rechtsanwälte PartmbB
Postfach 860 820
81635 München (DE)**

(54) **METHOD FOR PRODUCING COMPOSITE HYDROXIDE, AND COMPOSITE HYDROXIDE**

(57) Provided is a method of manufacturing a composite hydroxide containing nickel (Ni) and cobalt (Co) that can appropriately control a BET specific surface area without impairing a tap density and that can reduce a reduction cost.

The method of manufacturing a composite hydroxide containing at least nickel (Ni) and cobalt (Co), wherein a first metal-containing aqueous solution containing A mol% of nickel (Ni) and B mol% of cobalt (Co), a second metal-containing aqueous solution containing C mol% of nickel (Ni) and D mol% of cobalt (Co), wherein A>C, B<D, A+B=100, and C+D=100, an aqueous solution of an alkali metal, and an aqueous solution containing an ammonium-ion supplying material, are separately fed into a reaction vessel; and a solution in the reaction vessel is maintained to have a pH value based on a liquid temperature at 25°C within a range of 10.0 or higher and 13.0 or lower and a concentration of ammonium ion within a range of 1.0 g/L or more and 10.0 g/L or less.

**Description**

Technical Field

The present invention relates to a method of manufacturing a composite hydroxide containing nickel (Ni) and cobalt (Co) in which the method of manufacturing a composite hydroxide can reduce a production cost of the composite hydroxide and appropriately control a BET specific surface area. The present invention also relates to a composite hydroxide containing nickel (Ni) and cobalt (Co) in which change in a BET specific surface area due to variation of particle diameters is reduced to uniformize reactivity between the composite hydroxide and a lithium compound.

Background Art

In recent years, secondary batteries have been widely used in the fields such as powder supplies of portable devices and power sources of vehicles using or simultaneously using electricity in terms of reduction in an environmental load. Examples of the secondary batteries include a secondary battery using a non-aqueous electrolyte, such as a lithium-ion secondary battery. The secondary battery using the non-aqueous electrolyte, such as the lithium-ion secondary battery, is suitable for miniaturization and weight-saving, and also has battery characteristics such as high usage rate, high cycle characteristics, and large charge-discharge capacity.

For a positive electrode active material of the non-aqueous electrolyte secondary battery such as the lithium-ion secondary battery, a composite hydroxide is used as its precursor. As the composite hydroxide, which is the precursor of the positive electrode active material, a composite hydroxide containing nickel (Ni) and cobalt (Co) is used in some cases.

As higher performance is achieved in devices having the secondary battery mounted thereon, further improvements in battery characteristics such as further higher capacity have been required. Accordingly, investigated is a method of manufacturing a composite hydroxide containing nickel (Ni) and cobalt (Co) to obtain a positive electrode active material that can impart more excellent battery characteristics. In the method of manufacturing a composite hydroxide, investigated is imparting excellent battery characteristics by managing a method of adding a raw material liquid. Proposed as the method of manufacturing a composite hydroxide relating to the method of adding a raw material liquid is, for example, as follows: an aqueous solution of a metal compound containing at least one element selected from Ni and Co or Mn, an aqueous solution of sodium aluminate, an aqueous solution of sodium hydroxide, and an aqueous solution containing an ammonium-ion supplying material are each fed into one reaction vessel separately and simultaneously to proceed the reaction (Patent Literature 1).

In Patent Literature 1, the composite hydroxide containing nickel (Ni) and cobalt (Co) has a spherical particle shape, and a positive electrode active material obtained from the composite hydroxide can be loaded onto a positive electrode at a high density to obtain a large-capacity positive electrode material having good safety such as thermal stability and charge-discharge cycle characteristics.

Meanwhile, since the secondary batteries are used in the various fields, the production cost of the composite hydroxide containing nickel (Ni) and cobalt (Co) is also required to be reduced. When the composite hydroxide containing nickel (Ni) and cobalt (Co) is used for the precursor of the positive electrode active material of the lithium-ion secondary battery, it is required to appropriately control reactivity of the composite hydroxide being the precursor with lithium depending on the usage condition for imparting excellent battery characteristics such as cycle characteristics and large capacity in some cases. The reactivity of the composite hydroxide being the precursor with lithium can be appropriately controlled by appropriately controlling the BET specific surface area. Regardless of the size of the particle diameter of the composite hydroxide being the precursor, uniformizing the BET specific surface area to uniformize the reactivity between the composite hydroxide and lithium enables the composite hydroxide to impart the excellent battery characteristics such as cycle characteristics and large capacity.

However, Patent Literature 1 has room for improvement in reducing the production cost of the composite hydroxide and appropriately controlling the BET specific surface area. Patent Literature 1 also has room for improvement in uniformizing the BET specific surface area regardless of the size of the particle diameter of the composite hydroxide.

Document List

Patent Literature

Patent Literature 1: Japanese Patent Application Publication No. 2006-089364

Summary of Invention

Technical Problem

Considering the above circumstances, it is an object of the present invention to provide: a method of manufacturing a composite hydroxide containing nickel (Ni) and cobalt (Co) that can appropriately control the BET specific surface area without impairing a tap density and that can reduce the production cost; and a composite hydroxide in which change in the BET specific surface area due to variation of the particle diameters is reduced for uniformizing the reactivity between the composite hydroxide and the metal compound to improve the battery characteristics.

Solution to Problem

The present invention is to manufacture the composite hydroxide containing nickel (Ni) and cobalt (Co) by: preparing a first raw material liquid mainly containing nickel (Ni) and a second raw material liquid mainly containing cobalt (Co), among nickel (Ni) and cobalt (Co), as raw material liquids for the composite hydroxide containing nickel (Ni) and cobalt (Co); and separately adding the first raw material liquid and the second raw material liquid into a reaction vessel.
The summary of a constitution of the present invention is as follows.

[1] A method of manufacturing a composite hydroxide containing at least nickel (Ni) and cobalt (Co), wherein a first metal-containing aqueous solution containing A mol% of nickel (Ni) and B mol% of cobalt (Co), a second metal-containing aqueous solution containing C mol% of nickel (Ni) and D mol% of cobalt (Co), wherein A>C, B<D, A+B=100, and C+D=100, an aqueous solution of an alkali metal, and an aqueous solution containing an ammonium-ion supplying material, are separately fed into a reaction vessel; and a solution in the reaction vessel is maintained to have a pH value based on a liquid temperature at 25°C within a range of 10.0 or higher and 13.0 or lower and a concentration of ammonium ion within a range of 1.0 g/L or more and 10.0 g/L or less.
[2] The method of manufacturing a composite hydroxide according to [1], wherein a ratio of A to C is 5 or more, and a ratio of D to B is 5 or more.
[3] The method of manufacturing a composite hydroxide according to [1] or [2], wherein the first metal-containing aqueous solution is free of cobalt (Co) and the second metal-containing aqueous solution is free of nickel (Ni).
[4] The method of manufacturing a composite hydroxide according to any one of [1] to [3], wherein the first metal-containing aqueous solution and the second metal-containing aqueous solution are simultaneously fed into the reaction vessel.
[5] The method of manufacturing a composite hydroxide according to any one of [1] to [4], wherein the composite hydroxide is represented by $Ni_{1-x-y}Co_xM_yO_z(OH)_{2-\alpha}$ wherein $0 < x \leq 0.3$, $0 \leq y \leq 0.3$, $0 \leq z \leq 3.00$, $-0.50 \leq \alpha < 2.00$, and M represents one or more additive metal elements selected from the group consisting of Mn, Mg, Zr, Al, Ca, Ti, Nb, V, Cr, Mo, and W.
[6] The method of manufacturing a composite hydroxide according to any one of [1] to [5], wherein the first metal-containing aqueous solution is fed into the reaction vessel through a first raw-material liquid feeder, and the second metal-containing aqueous solution is fed into the reaction vessel through a second raw-material liquid feeder differing from the first raw-material liquid feeder.
[7] The method of manufacturing a composite hydroxide according to any one of [1] to [6], wherein the reaction vessel is a continuous reaction vessel that overflows a generated composite hydroxide.
[8] The method of manufacturing a composite hydroxide according to any one of [1] to [7], wherein the concentration of the ammonium ion in the reaction vessel is maintained within a range of 1.0 g/L or more and 5.0 g/L or less.
[9] The method of manufacturing a composite hydroxide according to any one of [1] to [8], wherein a reaction temperature in the reaction vessel is 20°C or higher and 80°C or lower.
[10] The method of manufacturing a composite hydroxide according to any one of [1] to [9], wherein the composite hydroxide is a precursor of a positive electrode active material of a secondary battery.
[11] A composite hydroxide, comprising at least nickel (Ni) and cobalt (Co), wherein

the composite hydroxide has first particles having a secondary particle diameter within a range of D10 at a cumulative volume percentage of 10 vol% $\pm$ 1.0 $\mu$m, second particles having a secondary particle diameter within a range of D50 at a cumulative volume percentage of 50 vol% $\pm$ 1.0 $\mu$m, and third particles having a secondary particle diameter within a range of D90 at a cumulative volume percentage of 90 vol% $\pm$ 1.0 $\mu$m, and a product of an absolute value of a rate of change calculated with the following formula (1) from a BET specific surface area and a secondary particle diameter at a cumulative volume percentage of 50 vol% (D50) of the first particles and a BET specific surface area and a secondary particle diameter at a cumulative volume percentage of 50 vol% (D50) of the third particles, and of a molar percentage of cobalt (Co) in metal elements contained in the composite hydroxide, the metal element being Ni, Co, Mn, Mg, Zr, Al, Ca, Ti, Nb, V, Cr, Mo, and W, is 0 or more and 0.015 or less,

$$|(\text{the BET specific surface area of the third particles} - \text{the BET specific}$$

$$\text{surface area of the first particles}) / (\text{D50 of the third particles} - \text{D50 of the first}$$

$$\text{particles})| = \text{the absolute value of the rate of change} \dots \text{formula (1)}.$$

[12] The composite hydroxide according to [11], wherein the composite hydroxide is represented by $Ni_{1-x-y}Co_xM_y$-$O_z(OH)_{2-\alpha}$ wherein $0 < x+y < 0.20$, $0 \le z \le 3.00$, $-0.50 \le \alpha < 2.00$, and M represents one or more additive metal elements selected from the group consisting of Mn, Mg, Zr, Al, Ca, Ti, Nb, V, Cr, Mo, and W.
[13] The composite hydroxide according to [12], wherein in the $Ni_{1-x-y}Co_xM_yO_z(OH)_{2-\alpha}$, $0.02 < x < 0.20$.
[14] The composite hydroxide according to any one of [11] to [13], wherein a value of (D90 of the composite hydroxide - D10 of the composite hydroxide) / D50 of the composite hydroxide is 0.50 or more and 1.40 or less.

Effects of Invention

According to an aspect of the method of manufacturing a composite hydroxide of the present invention, the first metal-containing aqueous solution containing A mol% of nickel (Ni) and B mol% of cobalt (Co); and the second metal-containing aqueous solution containing C mol% of nickel (Ni) and D mol% of cobalt (Co) wherein A>C, B<D, A+B=100, and C+D=100 are separately fed into the reaction vessel to enable to manufacture the composite hydroxide in which the BET specific surface area is appropriately controlled with lowering a reaction temperature and/or reducing a concentration of ammonium ion without impairing a tap density. As above, according to an aspect of the present invention, the reaction temperature can be lowered and/or the concentration of ammonium ion can be reduced in the manufacture of the composite hydroxide in which the BET specific surface area is controlled, and thereby the production cost of the composite hydroxide can be reduced.
According to an aspect of the method of manufacturing a composite hydroxide of the present invention, the ratio of the content of nickel (Ni) in the first metal-containing aqueous solution to the content of nickel (Ni) in the second metal-containing aqueous solution is 5 or more, and the ratio of the content of cobalt (Co) in the second metal-containing aqueous solution to the content of cobalt (Co) in the first metal-containing aqueous solution is 5 or more, and thereby the composite hydroxide in which the BET specific surface area is more appropriately controlled can be manufactured without impairing the tap density even when the reaction temperature is further lowered and/or the concentration of ammonium ion is further reduced.
According to an aspect of the method of manufacturing a composite hydroxide of the present invention, the first metal-containing aqueous solution is free of cobalt (Co) and the second metal-containing aqueous solution is free of nickel (Ni), and thereby the composite hydroxide in which the BET specific surface area is more surely and appropriately controlled can be manufactured without impairing the tap density even when the reaction temperature is further lowered and/or the concentration of ammonium ion is further reduced.
According to an aspect of the method of manufacturing a composite hydroxide of the present invention, the composite hydroxide is represented by $Ni_{1-x-y}Co_xM_yO_z(OH)_{2-\alpha}$ wherein $0 < x \le 0.3$, $0 \le y \le 0.3$, $0 \le z \le 3.00$, $-0.50 \le \alpha < 2.00$, and M represents one or more additive metal elements selected from the group consisting of Mn, Mg, Zr, Al, Ca, Ti, Nb, V, Cr, Mo, and W, and thereby contribution can be achieved to impart a battery characteristic of high capacity to a secondary battery using the obtained composite hydroxide as a precursor of a positive electrode active material.
According to an aspect of the method of manufacturing a composite hydroxide of the present invention, the reaction vessel is the continuous reaction vessel that overflows a generated composite hydroxide, and thereby the production efficiency of the composite hydroxide can be improved.
According to an aspect of the composite hydroxide, the composite hydroxide has first particles having a secondary particle diameter within a range of D10 at a cumulative volume percentage of 10 vol% $\pm$ 1.0 $\mu$m, second particles having a secondary particle diameter within a range of D50 at a cumulative volume percentage of 50 vol% $\pm$ 1.0 $\mu$m, and third particles having a secondary particle diameter within a range of D90 at a cumulative volume percentage of 90 vol% $\pm$ 1.0 $\mu$m; and a product of an absolute value of a rate of change calculated with the above formula (1) from a BET specific surface area and a secondary particle diameter at a cumulative volume percentage of 50 vol% (D50) of the first particle and a BET specific surface area and a secondary particle diameter at a cumulative volume percentage of 50 vol% (D50) of the third particles, and of a molar percentage of cobalt (Co) in metal elements contained in the composite hydroxide, the metal element being Ni, Co, Mn, Mg, Zr, Al, Ca, Ti, Nb, V, Cr, Mo, and W, is 0 or more and 0.015 or less, and thereby the change in the BET specific surface area due to variation of the particle diameters can be reduced to uniformize the reactivity between the composite hydroxide and a metal compound such as a lithium compound and the like, and the battery characteristics can be improved.

Brief Description of Drawing

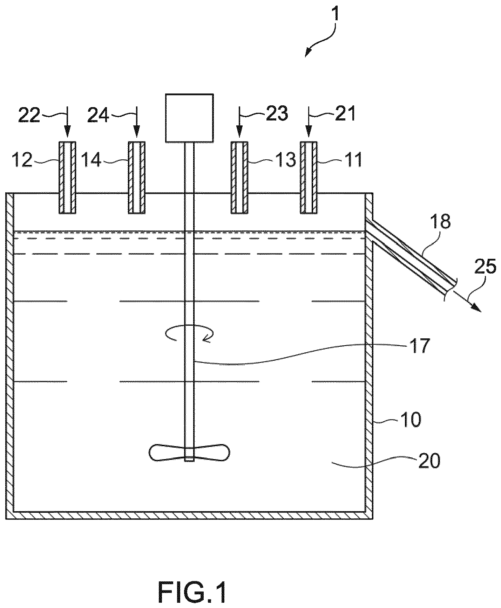

[FIG. 1] A side cross-sectional view illustrating an outline of example of an reactor used for a method of manufacturing a composite hydroxide of the present invention.

Description of Embodiments

Next, a method of manufacturing a composite hydroxide of the present invention will be described in detail. In the method of manufacturing a composite hydroxide of the present invention, a first metal-containing aqueous solution containing A mol% of nickel (Ni) and B mol% of cobalt (Co), a second metal-containing aqueous solution containing C mol% of nickel (Ni) and D mol% of cobalt (Co), wherein A>C, B<D, A+B=100, and C+D=100, an aqueous solution of an alkali metal, and an aqueous solution containing an ammonium-ion supplying material, are separately fed into a reaction vessel, and a solution in the reaction vessel is maintained to have a pH value based on a liquid temperature at 25°C within a range of 10.0 or higher and 13.0 or lower and a concentration of ammonium ion within a range of 1.0 g/L or more and 10.0 g/L or less. In the present invention, the composite hydroxide containing nickel (Ni) and cobalt (Co) is manufactured.

In the present invention, the first metal-containing aqueous solution, which is a first raw material liquid mainly containing nickel (Ni), and the second metal-containing aqueous solution, which is a second raw material liquid mainly containing cobalt (Co), among nickel (Ni) and cobalt (Co), are each separately prepared; and the first metal-containing aqueous solution and the second metal-containing aqueous solution are added into the reaction vessel through different pathways. When the first metal-containing aqueous solution and the second metal-containing aqueous solution are added into the reaction vessel, the solution in the reaction vessel is maintained to have a pH value based on a liquid temperature at 25°C within a range of 10.0 or higher and 13.0 or lower and a concentration of ammonium ion within a range of 1.0 g/L or more and 10.0 g/L or less.

To manufacture the composite hydroxide in which the BET specific surface area is appropriately controlled, it is required to rise the reaction temperature and to increase the concentration of ammonium ion for promoting the particle growth of the composite hydroxide. Meanwhile, in the present invention, the first metal-containing aqueous solution and the second metal-containing aqueous solution are separately added into the reaction vessel, and thereby the composite hydroxide in which the BET specific surface area is appropriately controlled can be manufactured with lowering the reaction temperature and/or reducing the concentration of ammonium ion without impairing the tap density. As above, when the composite hydroxide in which the BET specific surface area is appropriately controlled is manufactured, the reaction temperature can be lowered and/or the concentration of ammonium ion can be reduced, that is, the energy consumption can be reduced and the usage amount of ammonium ion can be reduced, and thereby the production cost of the composite hydroxide can be reduced.

<First Metal-Containing Aqueous Solution and Second Metal-Containing Aqueous Solution>

In the present invention, the plurality of the raw material liquids having different components, that is the first metal-containing aqueous solution and the second metal-containing aqueous solution are prepared as the raw material liquids.

The first metal-containing aqueous solution is a metal-containing aqueous solution mainly containing nickel (Ni) among nickel (Ni) and cobalt (Co). The second metal-containing aqueous solution is a metal-containing aqueous solution mainly containing cobalt (Co) among nickel (Ni) and cobalt (Co). Thus, a molar concentration of nickel (Ni) (A mol%) and a molar concentration of cobalt (Co) (B mol%) in the first metal-containing aqueous solution differ from a molar concentration of nickel (Ni) (C mol%) and a molar concentration of cobalt (Co) (D mol%) in the second metal-containing aqueous solution. In addition, the molar concentrations of nickel (Ni) have a relationship of A>C, and the molar concentrations of cobalt (Co) have a relationship of B<D. Furthermore, the concentrations have relationships of A+B=100 and C+D=100. Therefore, nickel (Ni) and cobalt (Co) are fed into the reaction vessel with mainly different raw material liquids.

With the molar concentration of nickel (Ni), a ratio between the molar concentration of nickel (Ni) in the first metal-containing aqueous solution and the molar concentration of nickel (Ni) in the second metal-containing aqueous solution is not particularly limited as long as satisfying the relationship of A>C. In terms of the manufacture of the composite hydroxide in which the BET specific surface area is more appropriately controlled without impairing the tap density even when the reaction temperature is further lowered and/or the concentration of ammonium ion is further reduced, the ratio of the molar concentration of nickel (Ni) in the first metal-containing aqueous solution to the molar concentration of nickel (Ni) in the second metal-containing aqueous solution is preferably 5 or more, more preferably 10 or more, and further preferably 20 or more. In terms of the manufacture of the composite hydroxide in which the BET specific surface area is more surely and appropriately controlled without impairing the tap density even when the reaction temperature is further lowered and/or the concentration of ammonium ion is further reduced, the second metal-containing aqueous solution particularly preferably is free of nickel (Ni). That is, a lower molar concentration of nickel (Ni) in the second metal-containing aqueous solution is more preferable.

With the molar concentration of cobalt (Co), a ratio between the molar concentration of cobalt (Co) in the first metal-containing aqueous solution and the molar concentration of cobalt (Co) in the second metal-containing aqueous solution is not particularly limited as long as satisfying the relationship of B<D. In terms of the manufacture of the composite hydroxide in which the BET specific surface area is more appropriately controlled without impairing the tap density even when the reaction temperature is further lowered and/or the concentration of ammonium ion is further reduced, the ratio of the molar concentration of cobalt (Co) in the second metal-containing aqueous solution to the molar concentration of cobalt (Co) in the first metal-containing aqueous solution is preferably 5 or more, more preferably 10 or more, and further preferably 20 or more. In terms of the manufacture of the composite hydroxide in which the BET specific surface area is more surely and appropriately controlled without impairing the tap density even when the reaction temperature is further lowered and/or the concentration of ammonium ion is further reduced, the first metal-containing aqueous solution particularly preferably is free of cobalt (Co). That is, a lower molar concentration of cobalt (Co) in the first metal-containing aqueous solution is more preferable.

From the above, in the composite hydroxide containing nickel (Ni) and cobalt (Co) manufactured with the method of the present invention, nickel (Ni) and cobalt (Co) are particularly preferably derived from the different raw material liquids.

The first metal-containing aqueous solution and the second metal-containing aqueous solution are fed in to the reaction vessel simultaneously and separately, for example. Thus, the feed of the first metal-containing aqueous solution into the reaction vessel and the feed of the second metal-containing aqueous solution into the reaction vessel are performed parallelly, and thereby the feed of nickel (Ni) and cobalt (Co) into the reaction vessel is performed parallelly. The molar concentration of nickel (Ni) in the first metal-containing aqueous solution, the molar concentration of cobalt (Co) in the second metal-containing aqueous solution, and flow rates of the first metal-containing aqueous solution and second metal-containing aqueous solution are appropriately regulated depending on the composition of nickel (Ni) and cobalt (Co) in the composite hydroxide and the residence time in the reaction vessel.

A feeding amount of nickel (Ni) relative to a feeding amount of cobalt (Co) into the reaction vessel per unit time is not particularly limited, and can be appropriately selected depending on a desired composition ratio between nickel (Ni) and cobalt (Co) in the composite hydroxide. For example, the feeding amount of nickel (Ni) relative to the feeding amount of cobalt (Co) into the reaction vessel per unit time is preferably within a range of 2.5 or more and 50.0 or less, and particularly preferably within a range of 6.0 or more and 30.0 or less in terms of imparting of the battery characteristics of high capacity to the secondary battery using the obtained composite hydroxide as the precursor of the positive electrode active material.

In the composite hydroxide containing nickel (Ni) and cobalt (Co), an additive metal element M other than nickel (Ni) and cobalt (Co) may be further contained as necessary. Examples of the additive metal element M include manganese (Mn), magnesium (Mg), aluminum (Al), calcium (Ca), titanium (Ti), vanadium (V), chromium (Cr), zirconium (Zr), niobium (Nb), molybdenum (Mo), and tungsten (W). These additive metal elements M may be used alone, and may be used in combination of two or more thereof.

Examples of the composite hydroxide containing nickel (Ni) and cobalt (Co) include a composite hydroxide represented by the general formula $Ni_{1-x-y}Co_xM_yO_z(OH)_{2-a}$ wherein $0 < x \leq 0.3$, $0 \leq y \leq 0.3$, $0 \leq z \leq 3.00$, $-0.50 \leq \alpha < 2.00$, and M represents one or more additive metal elements selected from the group consisting of Mn, Mg, Zr, Al, Ca, Ti, Nb, V, Cr, Mo, and W.

The additive metal element M may be contained only in the first metal-containing aqueous solution, may be contained only in the second metal-containing aqueous solution, and may be contained in both the first metal-containing aqueous solution and the second metal-containing aqueous solution. Thus, the additive metal element M may be fed into the reaction vessel in a state where contained in the raw material liquid containing nickel (Ni), may be fed into the reaction vessel in a state where contained in the raw material liquid containing cobalt (Co), and may be fed into the reaction vessel in a state where contained in both the raw material liquid containing nickel (Ni) and the raw material liquid containing cobalt (Co).

In the method of manufacturing a composite hydroxide of the present invention, with a coprecipitation method, the first metal-containing aqueous solution in which a salt of nickel (Ni) (for example, a sulfate salt) is contained, the second metal-containing aqueous solution in which a salt of cobalt (Co) (for example, a sulfate salt) is contained, an aqueous solution containing an ammonium-ion supplying material, and an aqueous solution of an alkali metal are each separately added into the reaction vessel for neutralization reaction in the reaction vessel to manufacture particles of the composite hydroxide containing nickel (Ni) and cobalt (Co) and obtain a slurry suspension containing the composite hydroxide containing nickel (Ni) and cobalt (Co).

<Aqueous Solution of Alkali Metal>

The aqueous solution of an alkali metal is a pH regulator. Examples of the aqueous solution of an alkali metal include an aqueous solution of sodium hydroxide and an aqueous solution of potassium hydroxide. In the method of manufacturing a composite hydroxide of the present invention, the aqueous solution of an alkali metal is added into the reaction vessel to regulate a pH value based on a liquid temperature at 25°C within a range of 10.0 or higher and 13.0 or lower in the base liquid in the reaction vessel. The pH value based on a liquid temperature at 25°C in the base liquid in the reaction vessel is not particularly limited as long as it is within a range of 10.0 or higher and 13.0 or lower, but it is preferably within a range of 10.5 or more and 12.0 or less.

<Ammonium-Ion Supplying Material>

The ammonium-ion supplying material is a complexing agent. Ammonium ion can from a complex with nickel (Ni) ion, cobalt (Co) ion, and an ion of the additive metal element M. Examples of the ammonium-ion supplying material include aqueous ammonia, ammonium sulfate, ammonium chloride, ammonium carbonate, and ammonium fluoride. In the method of manufacturing a composite hydroxide of the present invention, the composite hydroxide in which the BET specific surface area is appropriately controlled can be manufactured even when the usage amount of the concentration of ammonium ion in the base liquid in the reaction vessel is reduced. Specifically, the concentration of ammonium ion in the base liquid in the reaction vessel is regulated within a range of 1.0 g/L or more and 10.0 g/L or less. With the method of manufacturing a composite hydroxide of the present invention, the usage amount of the ammonium-ion supplying material can be reduced, and thereby the production cost can be reduced. From the above, it is preferable to regulate the concentration of ammonium ion in the base liquid in the reaction vessel within a range of 1.0 g/L or more and 5.0 g/L or less.

In addition, with the method of manufacturing a composite hydroxide of the present invention, the composite hydroxide in which the BET specific surface area is appropriately controlled can be manufactured even when the reaction temperature of the base liquid in the reaction vessel is lowered. Specifically, the composite hydroxide in which the BET specific surface area is appropriately controlled can be manufactured even when the reaction temperature is regulated to 20°C or higher and 80°C or lower.

Next, an example of a reactor used for the method of manufacturing a composite hydroxide of the present invention will be described. FIG. 1 is a side cross-sectional view illustrating an outline of an example of the reactor used for the method of manufacturing a composite hydroxide of the present invention.

As illustrated in FIG. 1, a reactor 1 used for the method of manufacturing a composite hydroxide of the present invention includes: a reaction vessel 10 for retaining a base liquid 20; a first raw-material liquid feeder 11 for feeding a first metal-containing aqueous solution 21 into the base liquid 20 in the reaction vessel 10; a second raw-material liquid feeder 12 for feeding a second metal-containing aqueous solution 22 into the base liquid 20 in the reaction vessel 10; an alkali metal feeder 13 for feeding an aqueous solution of an alkali metal 23 into the reaction vessel 10; and an ammonium ion feeder 14 for feeding an aqueous solution containing the ammonium-ion supplying material 24 into the base liquid 20 in the reaction vessel 10.

The first raw-material liquid feeder 11 is a tubular body in which one end portion is communicated with the reaction vessel 10 and the other end portion is communicated with a storage vessel (not illustrated) storing the first metal-containing aqueous solution 21. The second raw-material liquid feeder 12 is a tubular body in which one end portion is communicated with the reaction vessel 10 and the other end portion is communicated with a storage vessel (not illustrated) storing the second metal-containing aqueous solution 22. The alkali metal feeder 13 is a tubular body in which one end portion is communicated with the reaction vessel 10 and the other end portion is communicated with a storage vessel (not illustrated) storing the aqueous solution of an alkali metal 23. The ammonium ion feeder 14 is a tubular body in which one end portion is communicated with the reaction vessel 10 and the other end portion is communicated with a storage vessel (not illustrated) storing the aqueous solution containing the ammonium-ion supplying material 24.

In the reactor 1, the first raw-material liquid feeder 11 is disposed at a portion deferring from the second raw-material liquid feeder 12. In addition, the storage vessel storing the first metal-containing aqueous solution 21 is a different storage vessel from the storage vessel storing the second metal-containing aqueous solution 22. Thus, the first metal-containing aqueous solution 21 and the second metal-containing aqueous solution 22 are each added into the reaction vessel 10 through the different pathways.

The reaction vessel 10 is equipped with a stirrer 17 thereinside. The stirrer 17 mixes: the first metal-containing aqueous solution 21 and the second metal-containing aqueous solution 22 contained in the base liquid 20 stored in the reaction vessel 10; the aqueous solution of an alkali metal 23 fed through the alkali metal feeder 13; and the aqueous solution containing the ammonium-ion supplying material 24 fed through the ammonium ion feeder 14 to uniformize a concentration of the raw materials in the entire base liquid 20 stored in the reaction vessel 10.

Examples of the stirrer 17 include a stirrer having a stirring blade equipped with a plurality of propeller blades on a tip of the stirring shaft. The number of stirring rotation of the stirrer 17 can be appropriately selected depending on a volume of the reaction vessel 10, a type of the stirring blade, and a residence time. For example, a stirring powder when three propeller blades are used to proceed the coprecipitation reaction for a residence time of 10 to 25 hours is preferably 0.3 kW/m$^3$ or more and 4.0 kW/m$^3$ or less, and particularly preferably 1.8 kW/m$^3$ or more and 2.6 kW/m$^3$ or less.

From the reaction vessel 10 uniformizing the concentrations of the raw materials and storing the base liquid 20 containing the metal components derived from the first metal-containing aqueous solution 21 and the second metal-containing aqueous solution 22, a slurry 25 (the composite hydroxide containing nickel (Ni) and cobalt (Co)) containing the composite hydroxide, which is a generated and grown reaction product, is obtained. On a side face part on a top part side of the reaction vessel 10, an overflow pipe 18 communicated with the inside of the reaction vessel 10 is provided. The slurry 25 containing the target composite hydroxide is taken out of the reaction vessel 10 through the overflow pipe 18.

From the above, the reactor 1 is a reactor that recovers the slurry 25 containing the target composite hydroxide by overflowing and that is equipped with the continuous reaction vessel 10. The reaction vessel 10 is the continuous reaction vessel that overflows the slurry 25 containing the generated composite hydroxide, and thereby the production efficiency of the slurry 25 containing the composite hydroxide can be improved.

The reactor 1 illustrated in FIG. 1 describes an outline of an example of the continuous reactor. The reactor used for the method of manufacturing a composite hydroxide of the present invention is not limited to the reactor 1 illustrated in FIG. 1 as long as it has a structure in which the first metal-containing aqueous solution and the second metal-containing aqueous solution are separately added into the reaction vessel. Instead of the continuous reaction vessel, the reactor used for the method of manufacturing a composite hydroxide of the present invention may be a batch-type reaction vessel not discharging the reaction product to the outside of the system until the reaction in the reaction vessel is terminated, as long as it has a structure in which the first metal-containing aqueous solution and the second metal-containing aqueous solution are separately added into the reaction vessel.

The composite hydroxide manufactured with the manufacturing method of the present invention can be used as the precursor of the positive electrode active material of the secondary battery. Next, a method of manufacturing a positive electrode active material using the composite hydroxide manufactured with the manufacturing method of the present invention as the precursor will be described. For example, in the method of manufacturing a positive electrode active material using the composite hydroxide manufactured with the manufacturing method of the present invention as the precursor, a lithium compound is firstly added into the composite hydroxide manufactured with the manufacturing method of the present invention to prepare a mixture of the composite hydroxide and the lithium compound. The lithium compound is not particularly limited as long as it is a compound containing lithium, and examples thereof include lithium carbonate and lithium hydroxide.

Next, the positive electrode active material can be manufactured by calcining the mixture obtained as above. The calcining condition is, for example, a calcining temperature of 700°C or higher and 1000°C or lower, a heating rate of 50 °C/h or more and 300 °C/h or less, and a calcining time of 5 hours or longer and 20 hours or shorter. An atmosphere of the calcination is not particularly limited, and example thereof include the air and oxygen. The calcining furnace used for the calcination is not particularly limited, and examples thereof include a stationary box furnace and a roller hearth continuous furnace.

Examples of the secondary battery using the composite hydroxide manufactured with the manufacturing method of the present invention include a lithium-ion secondary battery.

Next, the composite hydroxide manufactured by the manufacturing method of the present invention will be described in detail. The composite hydroxide of the present invention is a composite hydroxide comprising at least nickel (Ni) and cobalt (Co), wherein the composite hydroxide has first particles having a secondary particle diameter within a range of D10 at a cumulative volume percentage of 10 vol% ± 1.0 μm, second particles having a secondary particle diameter within a range of D50 at a cumulative volume percentage of 50 vol% ± 1.0 μm, and third particles having a secondary particle diameter within a range of D90 at a cumulative volume percentage of 90 vol% ± 1.0 μm; and a product of an absolute value of a rate of change calculated with the following formula (1) from a BET specific surface area and a secondary particle diameter at a cumulative volume percentage of 50 vol% (D50) of the first particles and a BET specific surface area and a secondary particle diameter at a cumulative volume percentage of 50 vol% (D50) of the third particles, and of a molar percentage of cobalt (Co) in metal elements contained in the composite hydroxide, the metal element being Ni, Co, Mn, Mg, Zr, Al, Ca, Ti, Nb, V, Cr, Mo, and W, is 0 or more and 0.015 or less,

$$|(\text{the BET specific surface area of the third particles - the BET specific surface area of the first particles}) / (\text{D50 of the third particles - D50 of the first particles})| = \text{the absolute value of the rate of change ... formula (1)}.$$

In a composite hydroxide having a conventional particle size distribution, particles having a smaller particle diameter have a larger BET specific surface area than particles having a larger particle diameter. When the composite hydroxide and the lithium compound are calcined, the particles having a smaller particle diameter increase a contacting area with the lithium compound per unit volume to promote the reaction with the lithium compound compared with the particles having a larger particle diameter. Thus, the conventional composite hydroxide has a large difference in the reactivity with the lithium compound between the particle having a larger particle diameter and the particle having a smaller particle diameter, leading to an ununiform reaction between the entire composite hydroxide and the lithium compound. When the reaction between the entire composite hydroxide and the lithium compound is ununiform, the battery characteristics and battery lifetime may be inhibited.

In contrast, the composite hydroxide of the present invention has the above constitution, and thereby the change in the BET specific surface area due to the variation of the particle diameters is reduced. That is, the difference among the BET specific surface area of the first particles, the BET specific surface area of the second particles, and the BET specific surface area of the third particles is reduced, and thereby the reactivity between the entire composite hydroxide and the metal compound such as the lithium compound is uniformized, and the battery characteristics can be improved.

In the composite hydroxide of the present invention, when the composite hydroxide is classified into the first particles being small particles having a secondary particle diameter within a range of D10 ± 1.0 $\mu$m, the second particles being medium particles having a secondary particle diameter within a range of D50 ± 10 $\mu$m, and the third particles being large particles having a secondary particle diameter within a range of D90 ± 10 $\mu$m, an absolute value of a value of a ratio of a difference between a BET specific surface area of the third particles and a BET specific surface area of the first particles to a difference between D50 of the third particles and D50 of the first particle (hereinafter, the absolute value may be referred to as "BET inclination") is reduced. As a result, a product of the BET inclination and of a molar percentage of cobalt (Co) in the metal elements contained in the composite hydroxide (the metal elements are Ni, Co, Mn, Mg, Zr, Al, Ca, Ti, Nb, V, Cr, Mo, and W) (hereinafter, which may be simply referred to as "cobalt molar percentage") is reduced to 0.015 or less. Since the composition of the composite hydroxide affects the BET specific surface area of the composite hydroxide and the battery characteristics, the constitutions of the BET inclination and the cobalt molar percentage are used as characteristics of the composite hydroxide of the present invention. A method of classifying the composite hydroxide of the present invention into the first particles, the second particles, and the third particles include airflow classification.

The value of the product of the BET inclination and the cobalt molar percentage is not particularly limited as long as it is 0 or more and 0.015 or less, but preferably 0.013 or less, and particularly preferably 0.011 or less in terms of further uniformization of the reactivity between the entire composite hydroxide and the lithium compound to further improve the battery characteristics.

Examples of the composite hydroxide of the present invention include a composite hydroxide represented by the general formula $Ni_{1-x-y}Co_xM_yO_z(OH)_{2-\alpha}$ wherein $0 < x+y < 0.20$, $0 \leq z \leq 3.00$, $-0.50 \leq \alpha < 2.00$, and M represents one or more additive metal elements selected from the group consisting of Mn, Mg, Zr, Al, Ca, Ti, Nb, V, Cr, Mo, and W. In the composite hydroxide with the above general formula, more than 80 mol% of nickel (Ni) is contained relative to the total of nickel (Ni), cobalt (Co), and the additive metal element (M).

In the composite hydroxide represented by the general formula $Ni_{1-x-y}Co_xM_yO_z(OH)_{2-\alpha}$, $0.02 < x < 0.20$ is preferable, that is, cobalt (Co) is preferably contained within a range of more than 2 mol% and less than 20 mol% relative to the total of nickel (Ni), cobalt (Co), and the additive metal element (M).

The composite hydroxide of the present invention has a spread of the predetermined particle size distribution. For example, a value (D90 of the composite hydroxide - D10 of the composite hydroxide) / D50 of the composite hydroxide, which is an index of the particle size distribution, is within a range of 0.50 or more and 1.40 or less. The value (D90 of the composite hydroxide - D10 of the composite hydroxide) / D50 of the composite hydroxide is 0.50 or more and 1.40 or less, and thereby the loading density of the positive electrode active material using the composite hydroxide of the present invention as the precursor onto the positive electrode is improved, and more excellent battery characteristics can be exhibited. The value (D90 of the composite hydroxide - D10 of the composite hydroxide) / D50 of the composite hydroxide is not particularly limited, but a lower limit of the value (D90 of the composite hydroxide - D10 of the composite hydroxide) / D50 of the composite hydroxide is preferably 0.65 or more, and particularly preferably 0.80 or more from the viewpoint of improvement in the loading density onto the positive electrode. The BET specific surface area of the composite hydroxide of the present invention is not particularly limited, but an upper limit thereof is preferably 50.0 or less, more preferably 25.0 or less, and particularly preferably 15.0 or less from the viewpoint of control of the reactivity with the metal compound such as the lithium compound. A lower limit of the BET specific surface area is preferably 3.0 or more, more preferably 4.5 or more, and particularly preferably 6.0 or more.

Examples

Next, Examples of the method of manufacturing a composite hydroxide of the present invention and the composite hydroxide of the present invention will be described, but the present invention is not limited to these Examples as long as not departing from the purport.

Manufacture of Composite Hydroxide of Examples and Comparative Examples

Manufacture of Composite Hydroxide of Example 1

So that a composition of the composite hydroxide was that shown in the following Table 1, an aqueous solution in which an aqueous solution of nickel sulfate, an aqueous solution of manganese sulfate, and an aqueous solution of magnesium sulfate were mixed at predetermined amounts and being free of cobalt (corresponding to the first metal-containing aqueous solution); an aqueous solution of cobalt sulfate being free of nickel (corresponding to the second metal-containing aqueous solution); an aqueous solution of ammonium sulfate (corresponding to the aqueous solution containing the ammonium-ion supplying material); and an aqueous solution of sodium hydroxide (corresponding to the aqueous solution of the alkali metal) were each dropped into a reaction vessel separately and simultaneously, and the mixture was continuously stirred with a stirrer with maintaining a pH based on a liquid temperature at 25°C in the mixed liquid in the reaction vessel to 11.7 and a concentration of ammonia to 4.4 g/L. A liquid temperature of the mixed liquid in the reaction vessel (reaction temperature) was maintained at 70°C. A slurry containing generated composite hydroxide particles was taken with overflowing through an overflow tube of the reaction vessel. A slurry of composite hydroxide particles collected after 41.7 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Example 1 are shown in the following Table 1.

Manufacture of Composite Hydroxide of Example 2

So that a composition of the composite hydroxide was that shown in the following Table 1, an aqueous solution in which an aqueous solution of cobalt sulfate, an aqueous solution of manganese sulfate, and an aqueous solution of magnesium sulfate were mixed at predetermined amounts and being free of nickel (corresponding to the second metal-containing aqueous solution); an aqueous solution of nickel sulfate being free of cobalt (corresponding to the first metal-containing aqueous solution); an aqueous solution of ammonium sulfate (corresponding to the aqueous solution containing the ammonium-ion supplying material); and an aqueous solution of sodium hydroxide (corresponding to the aqueous solution of the alkali metal) were each dropped into a reaction vessel separately and simultaneously, and the mixture was continuously stirred with a stirrer with maintaining a pH based on a liquid temperature at 25°C in the mixed liquid in the reaction vessel to 11.2 and a concentration of ammonia to 3.7 g/L. A liquid temperature of the mixed liquid in the reaction vessel (reaction temperature) was maintained at 70°C. A slurry containing generated composite hydroxide particles was taken with overflowing through an overflow tube of the reaction vessel. A slurry of composite hydroxide particles collected after 42.0 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Example 2 are shown in the following Table 1.

Manufacture of Composite Hydroxide of Comparative Example 1

So that a composition of the composite hydroxide was that shown in the following Table 1, an aqueous solution of metal salts in which an aqueous solution of nickel sulfate, an aqueous solution of cobalt sulfate, an aqueous solution of manganese sulfate, and an aqueous solution of magnesium sulfate were mixed at predetermined amounts; an aqueous solution of ammonium sulfate (corresponding to the ammonium-ion supplying material); and an aqueous solution of sodium hydroxide were each dropped into a reaction vessel separately and simultaneously, and the mixture was continuously stirred with a stirrer with maintaining a pH based on a liquid temperature at 25°C in the mixed liquid in the reaction vessel to 11.5 and a concentration of ammonia to 3.7 g/L. A liquid temperature of the mixed liquid in the reaction vessel was maintained at 70°C. A slurry containing generated composite hydroxide particles was taken with overflowing through an overflow tube of the reaction vessel. A slurry of composite hydroxide particles collected after 41.7 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Comparative Example 1 are shown in the following Table 1.

Manufacture of Composite Hydroxide of Comparative Example 2

A composite hydroxide was obtained in the same manner as in Comparative Example 1 except that: the pH based on a liquid temperature at 25°C was 11.9; and the concentration of ammonia was 6.0 g/L. The composition and the manufacturing condition of the composite hydroxide of the Comparative Example 2 are shown in the following Table 1.

Manufacture of Composite Hydroxide of Example 3

So that a composition of the composite hydroxide was that shown in the following Table 2, an aqueous solution in which an aqueous solution of nickel sulfate and an aqueous solution of manganese sulfate were mixed at predetermined amounts and being free of cobalt (corresponding to the first metal-containing aqueous solution); an aqueous solution of cobalt sulfate being free of nickel (corresponding to the second metal-containing aqueous solution); an aqueous solution of ammonium sulfate (the ammonium-ion supplying material); and an aqueous solution of sodium hydroxide were each dropped into a reaction vessel separately and simultaneously, and the mixture was continuously stirred with a stirrer with maintaining a pH based on a liquid temperature at 25°C in the mixed liquid in the reaction vessel to 10.9 and a concentration of ammonia to 4.7 g/L. A liquid temperature of the mixed liquid in the reaction vessel was maintained at 70°C. A slurry containing generated composite hydroxide particles was taken with overflowing through an overflow tube of the reaction vessel. A slurry of composite hydroxide particles collected after 41.7 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Example 3 are shown in the following Table 2.

Manufacture of Composite Hydroxide of Comparative Example 3

So that a composition of the composite hydroxide was that shown in the following Table 2, an aqueous solution of metal salts in which an aqueous solution of nickel sulfate, an aqueous solution of cobalt sulfate, and an aqueous solution of manganese sulfate were mixed at predetermined amounts; an aqueous solution of ammonium sulfate (the ammonium-ion supplying material); and an aqueous solution of sodium hydroxide were each dropped into a reaction vessel separately and simultaneously, and the mixture was continuously stirred with a stirrer with maintaining a pH based on a liquid temperature at 25°C in the mixed liquid in the reaction vessel to 11.4 and a concentration of ammonia to 4.4 g/L. A liquid temperature of the mixed liquid in the reaction vessel was maintained at 50°C. A slurry containing generated composite hydroxide particles was taken with overflowing through an overflow tube of the reaction vessel. A slurry of composite hydroxide particles collected after 41.7 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Comparative Example 3 are shown in the following Table 2.

Manufacture of Composite Hydroxide of Comparative Example 4

A composite hydroxide was obtained in the same manner as in Comparative Example 3 except that: the pH based on a liquid temperature at 25°C was maintained to 11.1; the concentration of ammonia was maintained to 4.7 g/L; and the liquid temperature of the mixed liquid in the reaction vessel was maintained at 70°C. The composition and the manufacturing condition of the composite hydroxide of the Comparative Example 4 are shown in the following Table 2.

Manufacture of Composite Hydroxide of Example 4

A composite hydroxide was obtained in the same manner as in Example 3 except that: so that a composition of the composite hydroxide was that shown in the following Table 3, an aqueous solution in which an aqueous solution of nickel sulfate and an aqueous solution of manganese sulfate were dissolved at predetermined amounts and being free of cobalt (corresponding to the first metal-containing aqueous solution), and an aqueous solution of cobalt sulfate being free of nickel (corresponding to the second metal-containing aqueous solution) were used; the pH based on a liquid temperature at 25°C was maintained to 11.4; the concentration of ammonia was maintained to 2.1 g/L; the liquid temperature of the mixed liquid in the reaction vessel was maintained to 71°C; and a slurry of composite hydroxide particles collected after 51.0 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Example 4 are shown in the following Table 3.

Manufacture of Composite Hydroxide of Example 5

A composite hydroxide was obtained in the same manner as in Example 4 except that: so that a composition of the composite hydroxide was that shown in the following Table 3, an aqueous solution in which an aqueous solution of cobalt sulfate and an aqueous solution of manganese sulfate were dissolved at predetermined amounts and being free of nickel (corresponding to the second metal-containing aqueous solution), and an aqueous solution of nickel sulfate being free of cobalt (corresponding to the first metal-containing aqueous solution) were used; the pH based on a liquid temperature at 25°C was maintained to 11.0; the concentration of ammonia was maintained to 2.3 g/L; and a slurry of composite hydroxide particles collected after 48.6 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Example 5 are shown in the following Table 3.

Manufacture of Composite Hydroxide of Comparative Example 5

A composite hydroxide was obtained in the same manner as in Example 4 except that: an aqueous solution of metal salts in which an aqueous solution of nickel sulfate, an aqueous solution of cobalt sulfate, and an aqueous solution of manganese sulfate were mixed was used instead of the first metal-containing aqueous solution and the second metal-containing aqueous solution; the liquid temperature of the mixed liquid in the reaction vessel was 60°C; the pH based on a liquid temperature at 25°C was 11.7; the concentration of ammonia was 2.0 g/L; and a slurry of composite hydroxide particles collected after 49.2 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Comparative Example 5 are shown in the following Table 3.

Manufacture of Composite Hydroxide of Comparative Example 6

A composite hydroxide was obtained in the same manner as in Example 4 except that: an aqueous solution of metal salts in which an aqueous solution of nickel sulfate, an aqueous solution of cobalt sulfate, and an aqueous solution of manganese sulfate were mixed was used instead of the first metal-containing aqueous solution and the second metal-containing aqueous solution; the pH based on a liquid temperature at 25°C was 11.0; the concentration of ammonia was 1.7 g/L; and a slurry of composite hydroxide particles collected after 50.1 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Comparative Example 6 are shown in the following Table 3.

Manufacture of Composite Hydroxide of Example 6

A composite hydroxide was obtained in the same manner as in Example 3 except that: so that the composition of the composite hydroxide was that shown in the following Table 4, an aqueous solution in which an aqueous solution of nickel sulfate and an aqueous solution of manganese sulfate were mixed at predetermined amounts and being free of cobalt (corresponding to the first metal-containing aqueous solution), and an aqueous solution of cobalt sulfate being free of nickel (corresponding to the second metal-containing aqueous solution) were used; the pH based on a liquid temperature at 25°C was 11.3; the concentration of ammonia was 3.1 g/L; the liquid temperature of the mixed liquid in the reaction vessel was maintained to 75°C; and a slurry of composite hydroxide particles collected after 32.7 hours or longer from the beginning of the reaction was washed with an alkaline aqueous solution and water in this order, and subjected to each treatment of dehydration and drying to obtain a composite hydroxide. The composition and the manufacturing condition of the composite hydroxide of the Example 6 are shown in the following Table 4.

Manufacture of Composite Hydroxide of Comparative Example 7

A composite hydroxide was obtained in the same manner as in Example 6 except that: an aqueous solution of metal salts in which an aqueous solution of nickel sulfate, an aqueous solution of cobalt sulfate, and an aqueous solution of manganese sulfate were mixed was used instead of the first metal-containing aqueous solution and the second metal-containing aqueous solution; the pH based on a liquid temperature at 25°C was 11.0; the concentration of ammonia was 2.6 g/L; and the liquid temperature of the mixed liquid in the reaction vessel was maintained at 70°C. The composition and the manufacturing condition of the composite hydroxide of the Comparative Example 7 are shown in the following Table 4.

Manufacture of Composite Hydroxide of Comparative Example 8

A composite hydroxide was obtained in the same manner as in Example 6 except that: an aqueous solution of metal salts in which an aqueous solution of nickel sulfate, an aqueous solution of cobalt sulfate, and an aqueous solution of manganese sulfate were mixed was used instead of the first metal-containing aqueous solution and the second metal-containing aqueous solution; the concentration of ammonia was 3.7 g/L; and the liquid temperature of the mixed liquid in the reaction vessel was maintained at 80°C. The composition and the manufacturing condition of the composite hydroxide of the Comparative Example 8 are shown in the following Table 4.

Evaluation of Manufactured Composite Hydroxide

(1) Secondary Particle Diameter at Cumulative Volume Percentage of 50 Vol% (D50)

The obtained composite hydroxides were measured with a particle size distribution measurement device (used in Examples 1, 2, and 4 to 6, and Comparative Examples 1, 2, and 5 to 8 was MT3300EX II, manufactured by NIKKISO CO., LTD., and used in Example 3 and Comparative Examples 3 and 4 was LA-950, manufactured by HORIBA, Ltd.) (the principle of both the devices is laser diffraction/scattering method). Measurement conditions of the particle size distribution measurement device are as follows: solvent: water; refractive index of solvent: 1.33; refractive index of particle: 1.55; transmittance: 80±5%; dispersion medium: 10.0 mass% aqueous solution of sodium hexametaphosphate.

(2) Tap Density (TD)

On the obtained composite hydroxides, the tap density was measured by using a tap denser (KYT-4000, manufactured by Seishin Enterprise Co., Ltd.) with a constant-volume measurement method. Measurement conditions of TD are as follows: cell volume: 20 cc; stroke length: 10 mm; number of tapping: 200 (500 in Example 3 and Comparative Examples 3 and 4).

(3) BET Specific Surface Area

Under an nitrogen atmosphere, 0.3 g of the obtained composite hydroxide was dried at 105°C for 30 minutes, and then measured with a one-point BET method by using a specific surface area measurement device (Macsorb, manufactured by Mountech Co., Ltd.).

The following Tables 1 to 4 show evaluation results of physical properties of the composite hydroxides of Examples and Comparative Examples.

[Table 1]

| | Composition | | Ni : Co : Mn : Mg = 94.8 : 4.7 : 0.26 : 0.26 | | | |
|---|---|---|---|---|---|---|
| | | | Comparative Example 1 | Comparative Example 2 | Example 1 | Example 2 |
| | Reaction temperature | °C | 70 | 70 | 70 | 70 |
| | Concentration of ammonia | g/l | 3,7 | 6,0 | 4,4 | 3,7 |
| | Reaction pH | - | 11,5 | 11,9 | 11,7 | 11,2 |
| | Residence time | h | 13,9 | 13,9 | 13,9 | 14,0 |
| Results | D50 | μm | 10,9 | 10,9 | 11,2 | 10,6 |
| | TD | g/ml | 2,00 | 2,10 | 2,11 | 2,01 |
| | BET | m2/g | 24,8 | 18,6 | 15,1 | 10,7 |

[Table 2]

| | Composition | | Ni : Co : Mn = 55 : 20 : 25 | | |
|---|---|---|---|---|---|
| | | | Comparative Example 3 | Comparative Example 4 | Example 3 |
| | Reaction temperature | °C | 50 | 70 | 70 |
| | Concentration of ammonia | g/l | 4,4 | 4,7 | 4,7 |
| | Reaction pH | - | 11,4 | 11,1 | 10,9 |
| | Residence time | h | 13,9 | 13,9 | 13,8 |
| Results | D50 | μm | 12,1 | 12,1 | 12,5 |
| | TD | g/ml | 2,28 | 2,21 | 2,26 |
| | BET | m$^2$/g | 9,4 | 6,2 | 5,1 |

[Table 3]

| | Composition | | Ni : Co : Mn = 83.1 : 12.1 : 4.9 | | | |
|---|---|---|---|---|---|---|
| | | | Comparative Example 5 | Comparative Example 6 | Example 4 | Example 5 |
| | Reaction temperature | °C | 60 | 71 | 71 | 71 |
| | Concentration of ammonia | g/l | 2,0 | 1,7 | 2,1 | 2,3 |
| | Reaction pH | - | 11,7 | 11,0 | 11,4 | 11,0 |
| | Residence time | h | 16,4 | 16,7 | 17,0 | 16,2 |
| Results | D50 | μm | 10,9 | 11,2 | 10,4 | 10,1 |
| | TD | g/ml | 2,14 | 2,09 | 2,04 | 2,00 |
| | BET | m2/g | 11,1 | 10,8 | 6,6 | 6,0 |

[Table 4]

| | Composition | | Ni : Co : Mn = 83.1 : 12.1 : 4.9 | | |
|---|---|---|---|---|---|
| | | | Comparative Example 7 | Comparative Example 8 | Example 6 |
| | Reaction temperature | °C | 70 | 80 | 75 |
| | Concentration of ammonia | g/l | 2,6 | 3,7 | 3,1 |
| | Reaction pH | - | 11,0 | 11,3 | 11,3 |
| | Residence time | h | 10,9 | 10,9 | 10,9 |
| Results | D50 | μm | 10,9 | 11,4 | 10,8 |
| | TD | g/ml | 2,00 | 2,11 | 2,05 |
| | BET | m2/g | 14,2 | 8,8 | 8,4 |

From the Table 1, with the composite hydroxides of Examples 1 and 2 in which the first metal-containing aqueous solution containing nickel (Ni) and being free of cobalt (Co) and the second metal-containing aqueous solution containing cobalt (Co) and being free of nickel (Ni) were added into the reaction vessel separately and simultaneously, the BET specific surface area was reduced to 15.1 m$^2$/g and 10.7 m$^2$/g, respectively, by the addition with the concentration of ammonia as small as 4.4 g/L and 3.7 g/L, respectively. The tap density was 2.11 g/ml and 2.01 g/ml, respectively, and excellent tap densities were obtained. The compositions of the composite hydroxides of Examples 1 and 2 were Ni:Co:Mn:Mg = 94.8:4.7:0.26:0.26, and D50 was 11.2 μm and 10.6 μm , respectively.

In contrast, from the Table 1, with the composite hydroxide of Comparative Example 1 having Ni:Co:Mn:Mg = 94.8:4.7:0.26:0.26 and in which the reaction condition and D50 were equivalent to those in Examples 1 and 2 but nickel (Ni) and cobalt (Co) were added with the same raw material liquid, the BET specific surface area was 24.8 m²/g, and the BET specific surface area was not able to reduce. With Comparative Example 2 in which D50 was equivalent to that in Examples 1 and 2 but nickel (Ni) and cobalt (Co) were added with the same raw material liquid, the BET specific surface area was able to reduce in certain degree with the concentration of ammonia of 6.0 g/L. Thus, the usage amount of the ammonium-ion supplying material was increased in Comparative Example 2, and the production cost of the composite hydroxide was not able to reduce.

From the Table 2, with Example 3 in which the first metal-containing aqueous solution containing nickel (Ni) and being free of cobalt (Co) and the second metal-containing aqueous solution containing cobalt (Co) and being free of nickel (Ni) were added into the reaction vessel separately and simultaneously, the BET specific surface area was reduced to 5.1 m²/g by the addition with the concentration of ammonia as small as 4.7 g/L. The tap density was 2.26 g/ml, and excellent tap density was obtained. The compositions of the composite hydroxide of Example 3 was Ni:Co:Mn = 55:20:25, and D50 was 12.5 μm.

In contrast, from the Table 2, with the composite hydroxide of Comparative Example 3 having Ni:Co:Mn = 55:20:25 in which the reaction temperature was as low as 50°C and nickel (Ni) and cobalt (Co) were added with the same raw material liquid, the BET specific surface area was increased to 9.4 m²/g, and the BET specific surface area was not able to reduce. With Comparative Example 4 in which the reaction condition and D50 were equivalent to those in Example 3 but nickel (Ni) and cobalt (Co) were added with the same raw material liquid, the BET specific surface area was 6.2 m²/g, and the BET specific surface area was still not able to reduce.

From the Table 3, with the composite hydroxides of Examples 4 and 5 in which the first metal-containing aqueous solution containing nickel (Ni) and being free of cobalt (Co) and the second metal-containing aqueous solution containing cobalt (Co) and being free of nickel (Ni) were added into the reaction vessel separately and simultaneously, the BET specific surface area was reduced to 6.6 m²/g and 6.0 m²/g, respectively, by the addition with the concentration of ammonia as small as 2.1 g/L and 2.3 g/L, respectively. The tap density was 2.04 g/ml and 2.00 g/ml, respectively, and excellent tap densities were obtained. The compositions of the composite hydroxides of Examples 4 and 5 were Ni:Co:Mn = 83.1:12.1:4.9, and D50 was 10.4 μm and 10.1 μm, respectively.

In contrast, from the Table 3, with the composite hydroxide of Comparative Example 5 having Ni:Co:Mn = 83.1:12.1:4.9 in which the reaction temperature was as low as 60°C and nickel (Ni) and cobalt (Co) were added with the same raw material liquid, the BET specific surface area was increased to 11.1 m²/g, and the BET specific surface area was not able to reduce. With Comparative Example 6 in which the reaction condition and D50 were equivalent to those in Examples 4 and 5 but nickel (Ni) and cobalt (Co) were added with the same raw material liquid, the BET specific surface area was 10.8 m²/g, and the BET specific surface area was still not able to reduce.

From the Table 4, with Example 6 in which the first metal-containing aqueous solution containing nickel (Ni) and being free of cobalt (Co) and the second metal-containing aqueous solution containing cobalt (Co) and being free of nickel (Ni) were added into the reaction vessel separately and simultaneously, the BET specific surface area was reduced to 8.4 m²/g by lowering the reaction temperature to 75°C and by the addition with the concentration of ammonia as small as 3.1 g/L. The tap density was 2.05 g/ml, and excellent tap density was obtained. The compositions of the composite hydroxide of Example 6 was Ni:Co:Mn = 83.1:12.1:4.9, and D50 was 10.8 μm.

In contrast, from the Table 4, with the composite hydroxide of Comparative Example 7 having Ni:Co:Mn = 83.1:12.1:4.9 in which the reaction temperature was as low as 70°C, the concentration of ammonia was as low as 2.6 g/L, and nickel (Ni) and cobalt (Co) were added with the same raw material liquid, the BET specific surface area was increased to 14.2 m²/g, and the BET specific surface area was not able to reduce. With Comparative Example 8 in which the reaction temperature was 80°C and the concentration of ammonia was 3.7 g/L, the reaction temperature and the concentration of ammonia were increased compared with Example 6; and nickel (Ni) and cobalt (Co) were added with the same raw material liquid, the BET specific surface area was able to reduce to that equivalent to Example 6. Thus, the energy consumption was not able to reduce and the usage amount of ammonium ion was not able to reduce in Comparative Example 8, and thereby the production cost of the composite hydroxide was not able to reduce.

Among the composite hydroxides of Examples 1 to 6 and the composite hydroxides of Comparative Examples 1 to 8, the secondary particle diameter at a cumulative volume percentage of 10 vol% (D10) and the secondary particle diameter at a cumulative volume percentage of 90 vol% (D90) of the composite hydroxides of Examples 1, 2, and 4 to 6 and the composite hydroxides of Comparative Examples 1, 2, 6, and 7 were measured with the evaluation method same as in the secondary particle diameter at a cumulative volume percentage of 50 vol% (D50). From D10, D50, and D90 of the composite hydroxide, a value of (D90-D10)/D50, an index of the particle size distribution was calculated.

Furthermore, with the composite hydroxides of Examples 1, 2, and 4 to 6, and the composite hydroxides of Comparative Examples 1, 2, 6, and 7, the composite hydroxides were classified into: the first particles having a secondary particle diameter D50 after the classification being within a range of D10 of the composite hydroxide ± 1.0 μm; the

second particles having a secondary particle diameter D50 after the classification being within a range of D50 of the composite hydroxide $\pm$ 1.0 $\mu$m; and the third particles having a secondary particle diameter D50 after the classification being a range of D90 of the composite hydroxide $\pm$ 1.0 $\mu$m, by airflow classification. With each of the first particles and the third particles obtained by classifying the composite hydroxide, a secondary particle diameter at a cumulative volume percentage of 50 vol% (D50) was measured by the evaluation method same as in the above secondary particle diameter at a cumulative volume percentage of 50 vol% (D50). In addition, with each of the first particles and the third particles, the BET specific surface area was measured by the evaluation method same as in the above BET specific surface area. A BET inclination was calculated from D50s and the BET specific surface areas of the first particles and the third particles, and from the calculated BET inclination and the composition, a product of the BET inclination and the cobalt molar percentage was calculated.

The following Table 5 shows the results of the above each item.

[Table 5]

| | | | Example 1 | Example 2 | Comparative Example 1 | Comparative Example 2 | Example 4 | Example 5 | Comparative Example 6 | Example 6 | Comparative Example 7 |
|---|---|---|---|---|---|---|---|---|---|---|---|
| Composit ion | Ni | mol% | 94,8 | 94,8 | 94,8 | 94,8 | 83 | 83 | 83 | 83 | 83 |
| | Co | mol% | 4,7 | 4,7 | 4,7 | 4,7 | 12,1 | 12,1 | 12,1 | 12,1 | 12,1 |
| | Mn | mol% | 0,26 | 0,26 | 0,26 | 0,26 | 4,9 | 4,9 | 4,9 | 4,9 | 4,9 |
| | Mg | mol% | 0,26 | 0,26 | 0,26 | 0,26 | - | - | - | - | - |
| Particle diameter before classificat ion | D10 | $\mu$m | 6,2 | 5,7 | 5,6 | 5,8 | 5,8 | 5,5 | 5,7 | 6,4 | 6,4 |
| | D50 | $\mu$m | 11,2 | 10,6 | 10,9 | 10,9 | 10,4 | 10,1 | 11,2 | 11,2 | 10,9 |
| | D90 | $\mu$m | 19,1 | 17,7 | 18,3 | 19,4 | 17,6 | 16,4 | 18,2 | 18,4 | 18,0 |
| | (D10-D90)/D50 | $\mu$m | 1,15 | 1,14 | 1,16 | 1,24 | 1,14 | 1,08 | 1,12 | 1,07 | 1,06 |
| D50 after classificat ion | First particles | $\mu$m | 5,7 | 5,7 | 6 | 5,5 | 5,7 | 5,7 | 5,4 | 5,8 | 5,5 |
| | Third particles | | 18,4 | 17,9 | 18,5 | 18,7 | 17,7 | 17 | 17,6 | 17,8 | 20,2 |
| BET specific surface area after classificat ion | First particles | $m^2$/g | 14,3 | 10,7 | 25,1 | 18,5 | 5,8 | 5,6 | 10,7 | 6,6 | 13,9 |
| | Third particles | | 13,1 | 7,9 | 19,6 | 13,4 | 6,4 | 6 | 9,1 | 6,6 | 11,8 |
| BET inclination | | - | 0,09 | 0,23 | 0,43 | 0,39 | 0,05 | 0,04 | 0,13 | 0,00 | 0,14 |
| BET inclination $\times$ cobalt molar percentage | | | 0,004 | 0,011 | 0,020 | 0,018 | 0,006 | 0,004 | 0,016 | 0,000 | 0,017 |

**EP 4 129 925 A1**

(4) Thermogravimetry (TG measurement)

Among the composite hydroxides of Examples 1, 2, and 4 to 6, and the composite hydroxides of Comparative Examples 1, 2, 6, and 7, with the first particles and the third particles of the composite hydroxides of Examples 1, 2, and 6, and the composite hydroxides of Comparative Examples 1, 2, and 7, TG measurement was performed by mixing each particle with lithium hydroxide monohydrate for a molar ratio of lithium / all the metal elements = 1.05, and under conditions of a heating rate of 10 °C/minute, an oxygen feeding rate of 200 ml/minute, and a sampling frequency of 1/second. In addition, DTG was calculated by differentiating the TG data. From the relationship between DTG and the temperature, with each of the first particles and the third particles, temperatures of peak tops near 300°C, which were considered as peaks derived from the reaction between the composite hydroxide and lithium, were determined. Furthermore, the difference between the temperature at the peak top of the first particles and the temperature at the peak top of the third particles was determined.

The following Table 6 shows the evaluation result of the TG measurement.

18

[Table 6]

|  |  | Unit | Example 1 | Example 2 | Comparative Example 1 | Comparative Example 2 | Example 6 | Comparative Example 7 |
|---|---|---|---|---|---|---|---|---|
| DTG analysis | Temperature of peak top of first particles | °C | 290,5 | 295,5 | 290,3 | 294,8 | 293,1 | 293,5 |
|  | Temperature of peak top of third particles | °C | 299,0 | 300,8 | 305,1 | 319,0 | 304,4 | 314,6 |
|  | Difference in temperature of peak top | °C | 8,5 | 5,2 | 14,8 | 24,1 | 11,3 | 21,1 |

From the Tables 5 and 6, with the temperature of the peak top near 300°C, which was considered as a peak derived from the reaction between the composite hydroxide and lithium, of Examples 1, 2, and 6 in which the product of the BET inclination and the cobalt molar percentage was 0.015 or less, the difference between the first particles and the third particles was reduced to 11.3°C or less. Thus, with Examples 1 to 6 including Examples 1, 2, and 6 in which the product of the BET inclination and the cobalt molar percentage is 0.015 or less, it has been found that the reactivity between the entire composite hydroxide and the lithium compound is uniformized and the battery characteristics such as cycle characteristics can be improved. The composite hydroxides of Examples 1, 2, and 4 to 6, which had the value of (D90-D10)/D50 within a range of 1.07 to 1.15, had a spread of the particle size distribution in the same degree as that of a conventional composite hydroxide.

In contrast, with Comparative Examples 1, 2, and 7 in which the product of the BET inclination and the cobalt molar percentage was more than 0.015, the difference in the temperature of the peak top near 300°C between the first particles and the third particles was 14.8°C or more. Thus, with Comparative Examples 1 to 8 including Comparative Examples 1, 2, and 7 in which the product of the BET inclination and the cobalt molar percentage was more than 0.015, it has been found that the reactivity between the entire composite hydroxide and the lithium compound is ununiform, and the battery characteristics such as cycle characteristics cannot be sufficiently improved.

Industrial Applicability

The method of manufacturing a composite hydroxide containing nickel (Ni) and cobalt (Co) of the present invention can appropriately regulate the reactivity with lithium by appropriately controlling the BET specific surface area without impairing the tap density, and the production cost can be reduced, thereby the utility value is high in the field of the positive electrode active material of the lithium-ion secondary battery. In addition, in the composite hydroxide containing nickel (Ni) and cobalt (Co) of the present invention, the reactivity with lithium is uniformized regardless of the size of the particle diameter and the battery characteristics such as cycle characteristics can be improved, and thereby the utility value is high in the field of the positive electrode active material of the lithium-ion secondary battery.

List of Reference Signs

1    reactor

10    reaction vessel

21    first metal-containing aqueous solution

22    second metal-containing aqueous solution

**Claims**

1. A method of manufacturing a composite hydroxide containing at least nickel (Ni) and cobalt (Co), wherein

   a first metal-containing aqueous solution containing A mol% of nickel (Ni) and B mol% of cobalt (Co), a second metal-containing aqueous solution containing C mol% of nickel (Ni) and D mol% of cobalt (Co), wherein A>C, B<D, A+B=100, and C+D=100, an aqueous solution of an alkali metal, and an aqueous solution containing an ammonium-ion supplying material, are separately fed into a reaction vessel; and
   a solution in the reaction vessel is maintained to have a pH value based on a liquid temperature at 25°C within a range of 10.0 or higher and 13.0 or lower and a concentration of ammonium ion within a range of 1.0 g/L or more and 10.0 g/L or less.

2. The method of manufacturing a composite hydroxide according to claim 1, wherein a ratio of A to C is 5 or more, and a ratio of D to B is 5 or more.

3. The method of manufacturing a composite hydroxide according to claim 1 or 2, wherein the first metal-containing aqueous solution is free of cobalt (Co) and the second metal-containing aqueous solution is free of nickel (Ni).

4. The method of manufacturing a composite hydroxide according to any one of claims 1 to 3, wherein the first metal-containing aqueous solution and the second metal-containing aqueous solution are simultaneously fed into the reaction vessel.

5. The method of manufacturing a composite hydroxide according to any one of claims 1 to 4, wherein the composite hydroxide is represented by $Ni_{1-x-y}Co_xM_yO_z(OH)_{2-\alpha}$ wherein $0 < x \leq 0.3$, $0 \leq y \leq 0.3$, $0 \leq z \leq 3.00$, $-0.50 \leq \alpha < 2.00$, and M represents one or more additive metal elements selected from the group consisting of Mn, Mg, Zr, Al, Ca, Ti, Nb, V, Cr, Mo, and W.

6. The method of manufacturing a composite hydroxide according to any one of claims 1 to 5, wherein the first metal-containing aqueous solution is fed into the reaction vessel through a first raw-material liquid feeder, and the second metal-containing aqueous solution is fed into the reaction vessel through a second raw-material liquid feeder differing from the first raw-material liquid feeder.

7. The method of manufacturing a composite hydroxide according to any one of claims 1 to 6, wherein the reaction vessel is a continuous reaction vessel that overflows a generated composite hydroxide.

8. The method of manufacturing a composite hydroxide according to any one of claims 1 to 7, wherein the concentration of the ammonium ion in the reaction vessel is maintained within a range of 1.0 g/L or more and 5.0 g/L or less.

9. The method of manufacturing a composite hydroxide according to any one of claims 1 to 8, wherein a reaction temperature in the reaction vessel is 20°C or higher and 80°C or lower.

10. The method of manufacturing a composite hydroxide according to any one of claims 1 to 9, wherein the composite hydroxide is a precursor of a positive electrode active material of a secondary battery.

11. A composite hydroxide, comprising at least nickel (Ni) and cobalt (Co), wherein

the composite hydroxide has first particles having a secondary particle diameter within a range of D10 at a cumulative volume percentage of 10 vol% $\pm$ 1.0 $\mu$m, second particles having a secondary particle diameter within a range of D50 at a cumulative volume percentage of 50 vol% $\pm$ 1.0 $\mu$m, and third particles having a secondary particle diameter within a range of D90 at a cumulative volume percentage of 90 vol% $\pm$ 1.0 $\mu$m, and a product of an absolute value of a rate of change calculated with the following formula (1) from a BET specific surface area and a secondary particle diameter at a cumulative volume percentage of 50 vol% (D50) of the first particles and a BET specific surface area and a secondary particle diameter at a cumulative volume percentage of 50 vol% (D50) of the third particles, and of a molar percentage of cobalt (Co) in metal elements contained in the composite hydroxide, the metal element being Ni, Co, Mn, Mg, Zr, Al, Ca, Ti, Nb, V, Cr, Mo, and W, is 0 or more and 0.015 or less,

$$|(\text{the BET specific surface area of the third particles - the BET specific}$$
$$\text{surface area of the first particles) / (D50 of the third particles - D50 of the first}$$
$$\text{particles)}| = \text{the absolute value of the rate of change} \dots \text{formula (1)}.$$

12. The composite hydroxide according to claim 11, wherein the composite hydroxide is represented by $Ni_{1-x-y}Co_xM_yO_z(OH)_{2-\alpha}$ wherein $0 < x+y < 0.20$, $0 \leq z \leq 3.00$, $-0.50 \leq \alpha < 2.00$, and M represents one or more additive metal elements selected from the group consisting of Mn, Mg, Zr, Al, Ca, Ti, Nb, V, Cr, Mo, and W.

13. The composite hydroxide according to claim 12, wherein in the $Ni_{1-x-y}Co_xM_yO_z(OH)_{2-\alpha}$, $0.02 < x < 0.20$.

14. The composite hydroxide according to any one of claims 11 to 13, wherein a value of (D90 of the composite hydroxide - D10 of the composite hydroxide) / D50 of the composite hydroxide is 0.50 or more and 1.40 or less.

FIG.1

**INTERNATIONAL SEARCH REPORT**

| International application No. |
|---|
| PCT/JP2021/014290 |

A. CLASSIFICATION OF SUBJECT MATTER
C01G 53/00(2006.01)i; H01M 4/505(2010.01)i; H01M 4/525(2010.01)i
FI: C01G53/00 A; H01M4/525; H01M4/505
According to International Patent Classification (IPC) or to both national classification and IPC

B. FIELDS SEARCHED

Minimum documentation searched (classification system followed by classification symbols)
C01G53/00; H01M4/00-4/62

Documentation searched other than minimum documentation to the extent that such documents are included in the fields searched
Published examined utility model applications of Japan          1922–1996
Published unexamined utility model applications of Japan        1971–2021
Registered utility model specifications of Japan                1996–2021
Published registered utility model applications of Japan        1994–2021

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | KR 10-2017-0108184 A (KOREA ELECTRONICS TECHNOLOGY INSTITUTE) 27 September 2017 (2017-09-27) claims, paragraphs [0011], [0027]-[0032], [0055] | 1-14 |
| X | JP 2017-210395 A (SUMITOMO METAL MINING CO., LTD.) 30 November 2017 (2017-11-30) claims, fig. 1, paragraphs [0013]-[0015], [0024] | 1, 5-11, 13-14 |
| A |  | 2-4, 12 |
| X | CN 1994899 A (INNER MONGOLIA UNIVERSITY OF SCIENCE & TECHNOLOGY) 11 July 2007 (2007-07-11) claims, page 5, line 20 to page 7, line 10 | 1-3, 5-6, 8-9, 11-12, 14 |
| A |  | 4, 7, 10, 13 |
| A | JP 09-306487 A (MATSUSHITA ELECTRIC INDUSTRIAL CO., LTD.) 28 November 1997 (1997-11-28) entire text, all drawings | 1-14 |
| A | CN 110224123 A (GUANGDONG BRUNP RECYCL ING TECHNOLOGY CO., LTD.) 10 September 2019 (2019-09-10) entire text, all drawings | 1-14 |

☒ Further documents are listed in the continuation of Box C.       ☒ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 09 June 2021 (09.06.2021) | 22 June 2021 (22.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2021/014290

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2019-153567 A (SUMITOMO METAL MINING CO., LTD.) 12 September 2019 (2019-09-12) entire text, all drawings | 1-14 |
| A | JP 2018-523895 A (LG CHEM, LTD.) 23 August 2018 (2018-08-23) entire text | 1-14 |

Form PCT/ISA/210 (continuation of second sheet) (January 2015)

INTERNATIONAL SEARCH REPORT

Information on patent family members

International application No.

PCT/JP2021/014290

| Patent Documents referred in the Report | Publication Date | Patent Family | Publication Date |
|---|---|---|---|
| KR 10-2017-0108184 A | 27 Sep. 2017 | (Family: none) | |
| JP 2017-210395 A | 30 Nov. 2017 | (Family: none) | |
| CN 1994899 A | 11 Jul. 2007 | (Family: none) | |
| JP 09-306487 A | 28 Nov. 1997 | US 6129902 A entire text, all drawings US 6284215 B1 EP 856899 A2 EP 1890350 A2 CN 1195897 A | |
| CN 110224123 A | 10 Sep. 2019 | (Family: none) | |
| JP 2019-153567 A | 12 Sep. 2019 | (Family: none) | |
| JP 2018-523895 A | 23 Aug. 2018 | US 2018/0241073 A1 entire text WO 2017/069410 A1 EP 3316357 A KR 10-2017-0046066 A CN 107925065 A | |

Form PCT/ISA/210 (patent family annex) (January 2015)

**EP 4 129 925 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006089364 A